# EUROPEAN PATENT APPLICATION

(11) **EP 3 698 857 A1**
(43) Date of publication of application: **26.08.2020**
(21) Application number: 19191082.7
(22) Date of filing: 09.08.2019
(51) Int. Cl.: A63B 71/00, A61H 1/02, A61H 3/00

(54) **REHABILITATION ROBOT AND REHABILITATION SYSTEM**

(30) Priority: 22.02.2019 CN 201910131375
(71) Applicant: Guangzhou Harobot Rehabilitation Robot Production Co., Ltd., 510663 Guangzhou Guangdong (CN); Fujian Harobot Rehabilitation Robot Production Co., Ltd., Longyan Fujian (CN)
(72) Inventor: LUO, Xun, Guangzhou, Guangdong 510663 (CN); LAI, Kunyuan, Guangzhou, Guangdong 510663 (CN); WANG, Lin, Guangzhou, Guangdong 510663 (CN); ZHANG, Yuling, Guangzhou, Guangdong 510663 (CN); SHI, Lei, Guangzhou, Guangdong 510663 (CN); LUO, Xiaolin, Guangzhou, Guangdong 510663 (CN); GUO, Zelin, Guangzhou, Guangdong 510663 (CN); QUAN, Zhining, Guangzhou, Guangdong 510663 (CN); XIANG, Zhongping, Guangzhou, Guangdong 510663 (CN); LI, Pengcheng, Guangzhou, Guangdong 510663 (CN); LIU, Huan, Guangzhou, Guangdong 510663 (CN); YUAN, Huaman, Guangzhou, Guangdong (CN)
(74) Representative: Appleyard Lees IP LLP

(57) **Abstract**

A rehabilitation robot comprises an upper limb rehabilitation device comprising a shoulder width adjusting device for adjusting a shoulder width of the rehabilitation robot, a right arm device and a left arm device, the right arm device and the left arm device are disposed at two sides of the shoulder width adjusting device, respectively; and a lower limb rehabilitation device connected to the upper limb rehabilitation device.

## Description

### TECHNICAL FIELD

The present disclosure relates to a rehabilitation robot and a rehabilitation system having the same.

### BACKGROUND

Rehabilitation therapy, also called as rehabilitation physical therapy, is a comprehensive treatment method combining sports therapy, occupational therapy, speech therapy, physical therapy, acupuncture, canning and massage. Sports therapy is a special therapy for preventing, improving and restoring the dysfunction and malfunction of a patient's body through passive sports therapy, active sports therapy and resistance and sports therapy.

Patients generally have dysfunction problems in which one or more parts cannot move autonomously. Therefore, when performing sports therapy on patients, especially passive physical rehabilitation therapy, assistive devices are usually used, however, assistive devices cannot be well fitted to different patient conditions, thereby making patient's rehabilitation therapy experience worse.

### SUMMARY

Accordingly, it is necessary to provide a rehabilitation system, which is capable of meeting requirements of patients with different shoulder widths for rehabilitation therapy, allowing it to fit well with the patient, and improving the patient's therapy experience.

A rehabilitation robot includes an upper limb rehabilitation device and a lower limb rehabilitation device connected to the upper limb rehabilitation device. The upper limb rehabilitation device includes a shoulder width adjusting device, a right arm device, and a left arm device. The right arm device and the left arm device are disposed at two sides of the shoulder width adjusting device, respectively. The shoulder width adjusting device is used for adjusting a shoulder width of the rehabilitation robot.

A rehabilitation system includes a rehabilitation bed device and a rehabilitation robot disposed on the bed body. The rehabilitation bed device includes a bed mechanism. The bed mechanism includes a bed base and a bed body movably connected to the bed base. The rehabilitation robot includes an upper limb rehabilitation device and a lower limb rehabilitation device connected to the upper limb rehabilitation device. The upper limb rehabilitation device includes a shoulder width adjusting device a right arm device, and a left arm device. The right arm device and the left arm device are disposed at both sides of the shoulder width adjusting device, respectively. The shoulder width adjusting device is used for adjusting a shoulder width of the rehabilitation robot.

Through providing the shoulder width adjusting device, the rehabilitation system is capable of adjusting shoulder widths thereof and adjusting an interval between the right arm and the left arm thereof according to different shoulder widths conditions of patients, thereby allowing the rehabilitation robot to fit well with the patient, improving the rehabilitation therapy effect and improving the patient's therapy experience.

In one of the embodiments, the shoulder width adjusting device includes a back mechanism including a first back plate and a shoulder width adjusting mechanism. Both of the right arm device and the left arm device are movably connected to the first back plate. The shoulder width adjusting mechanism includes a shoulder width adjusting member. The shoulder width adjusting member is capable of driving the right arm device and the left arm device to move towards each other or away from each other, thereby adjusting the shoulder widths.

In one of the embodiments, the shoulder width adjusting device further includes a shoulder mechanism. The shoulder mechanism includes a first shoulder plate and a second shoulder plate. Both of the first shoulder plate and the second shoulder plate are movably connected to the first back plate. The right arm device is disposed on the first shoulder plate. The left arm device is disposed on the second shoulder plate. The shoulder width adjusting member drives the first shoulder plate and the second shoulder plate to move, so as to adjust an interval between the right arm device and the left arm device.

In one of the embodiments, the rehabilitation robot further includes a head device. The head device includes a helmet mechanism disposed on the first back plate and a head adjusting mechanism. The back mechanism further incluides a second back plate movably connected to the first back plate. The head adjusting mechanism is capable of driving the first back plate to move on the second back plate, so as to adjust a position of the helmet mechanism relative to the second back plate.

In one of the embodiments, the right arm device includes an upper arm mechanism and a lower arm mechanism. The upper arm mechanism includes an upper arm plate and an upper arm adjusting plate. The upper arm adjusting plate is movably connected to the upper arm plate and capable of moving along the upper arm plate. The lower arm mechanism comprises a lower arm plate, an end of the lower arm plate is rotatably connected to an end of the upper arm adjusting plate.

In one of the embodiments, the right arm device further includes a lower arm adjusting plate. The right arm device further includes a wrist plate rotatably connected to the lower arm adjusting plate and a first wrist driver fixed to the lower arm adjusting plate and configured to drive the wrist plate to rotate.

In one of the embodiments, the shoulder width adjusting device includes a back mechanism. The back mechanism includes a second back plate. The lower limb rehabilitation device includes a right leg device and a left leg device. Both of the right leg device and the left leg device are disposed on the second back plate.

In one of the embodiments, the lower limb rehabilitation device further comprises a hip device. The shoulder width adjusting device includes a second back plate. The hip device includes a first hip plate, a second hip plate, and a first hip sliding rail. The first hip sliding rail is disposed on the second back plate. The first hip plate is provided with a first hip slider. The first hip slider is capable of sliding along the first hip sliding rail, so as to adjust an interval between the first hip plate and the second hip plate.

In one of the embodiments, the rehabilitation system further incudes a rehabilitation bed device. The rehabilitation bed device incudes a bed base and a bed body movably connected to the bed base, and a rehabilitation robot of the rehabilitation system as described above disposed on the bed body.

In one of the embodiments, the rehabilitation system further incudes a vehicle mechanism, a ship propelling mechanism, and an aircraft mechanism. The ship propelling mechanism and the aircraft mechanism are disposed on the vehicle mechanism. The aircraft mechanism has a cabin. Both of the rehabilitation bed device and the rehabilitation robot are disposed in the cabin.

The rehabilitation system according to the present disclosure is capable of meeting this rehabilitation needs to the greatest extent, enabling patients to experience outdoor sun and air, and improving the effect of the rehabilitation.

These and other objects, advantages, purposes and features will become more apparent upon review of the following specification in conjunction with the drawings.

### BRIEF DESCRIPTION OF THE DRAWINGS

FIG. 1 is a perspective view of a rehabilitation robot in an embodiment.
FIG. 2 is a front view of the rehabilitation robot of FIG. 1.
FIG. 3 is an enlarged view of a shoulder width adjusting device and a head device of FIG. 1.
FIG. 4 is similar to FIG. 3 but viewed from another aspect.
FIG. 5 is a perspective, explosive view of the shoulder width adjusting device and the head device of FIG. 3.
FIG. 6 is a perspective, explosive view of the shoulder width adjusting device of FIG. 5.
FIG. 7 is a perspective assembled view of a first back plate of FIG. 3.
FIG. 8 is an enlarged perspective view of a right arm device of FIG. 1.
FIG. 9 is a perspective view of an upper arm wiggling mechanism of FIG. 8.
FIG. 10 is a perspective, explosive view of an upper arm adjusting plate of FIG. 8.
FIG. 11 is a perspective view of a wrist mechanism of FIG. 8.
FIG. 12 is a perspective view of a left leg device of FIG. 1.
FIG. 13 is similar to FIG. 12, but viewed from another aspect.
FIG. 14 is a perspective view of a hip device of FIG. 1.
FIG. 15 is an explosive view of the hip device of FIG. 14.

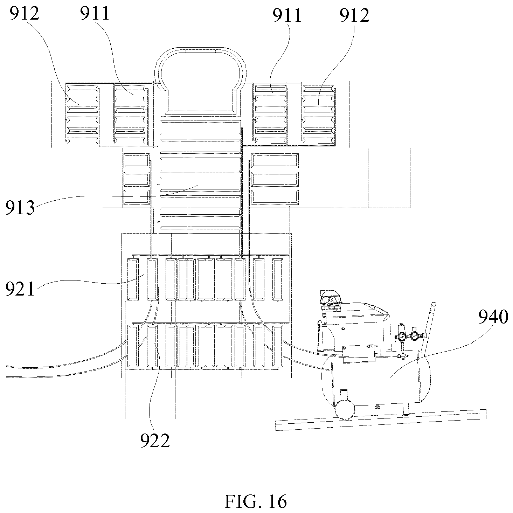

FIG. 16 is a rear view of an airbag device in an embodiment.

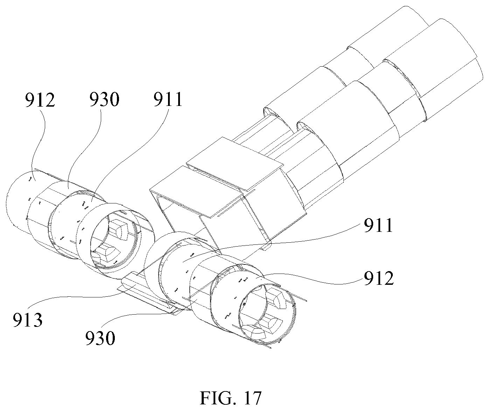

FIG. 17 is a perspective view of the airbag to be connected in an embodiment.
FIG. 18 is a perspective view of an armor in an embodiment.
FIG. 19 is a perspective view of a rehabilitation system in an embodiment.
FIG. 20 is a perspective view of a rehabilitation bed device of FIG. 19.
FIG. 21 is an explosive view of the rehabilitation bed device of FIG. 20.
FIG. 22 is an enlarged explosive view of the bed mechanism of FIG. 21.
FIG. 23 is an enlarged view of a bed adjustable shelf and an anti-fall mechanism of FIG. 21.
FIG. 24 is a detailed view of the anti-fall mechanism and a bed mechanism of FIG. 23.
FIG. 25 is a perspective view of a movable device in an embodiment.
FIG. 26 is an explosive view of the movable device of FIG. 25.

### DETAILED DESCRIPTION OF THE EMBODIMENTS

Embodiments of the disclosure are described more fully hereinafter with reference to the accompanying drawings. The various embodiments of the disclosure may, however, be embodied in many different forms and should not be construed as limited to the embodiments set forth herein. Rather, these embodiments are provided so that this disclosure will be thorough and complete, and will fully convey the scope of the disclosure to those skilled in the art. Elements that are identified using the same or similar reference characters refer to the same or similar elements.

It will be understood that when an element is referred to as being "connected" or "coupled" to another element, it can be directly connected or coupled to the other element or intervening elements may be present. In contrast, if an element is referred to as being "directly connected" or "directly coupled" to another element, there are no intervening elements present.

Unless otherwise defined, all terms (including technical and scientific terms) used herein have the same meaning as commonly understood by one of ordinary skills in the art to which this disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

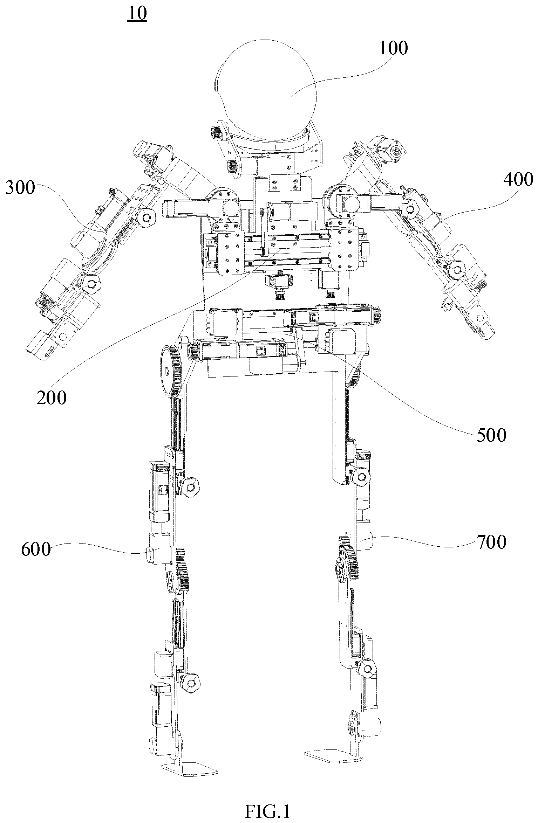

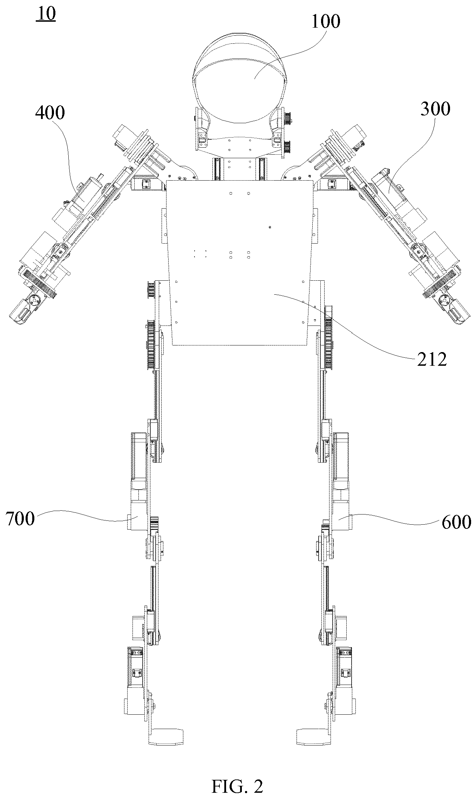

Referring to FIG. 1 and FIG. 2, a rehabilitation robot 10 according to an embodiment is provided, which includes: an upper limb rehabilitation device and a lower limb rehabilitation device connected to the upper limb rehabilitation device. The upper limb rehabilitation device includes a head device 100, a shoulder width adjusting device 200, a right arm device 300, and a left arm device 400. The head device 100 is disposed on the shoulder width adjusting device 200. The right arm device 300 and the left arm device 400 are disposed at two sides of the shoulder width adjusting device 200, respectively. The shoulder width adjusting device 200 is used to adjust a shoulder width of the rehabilitation robot to fit a patient.

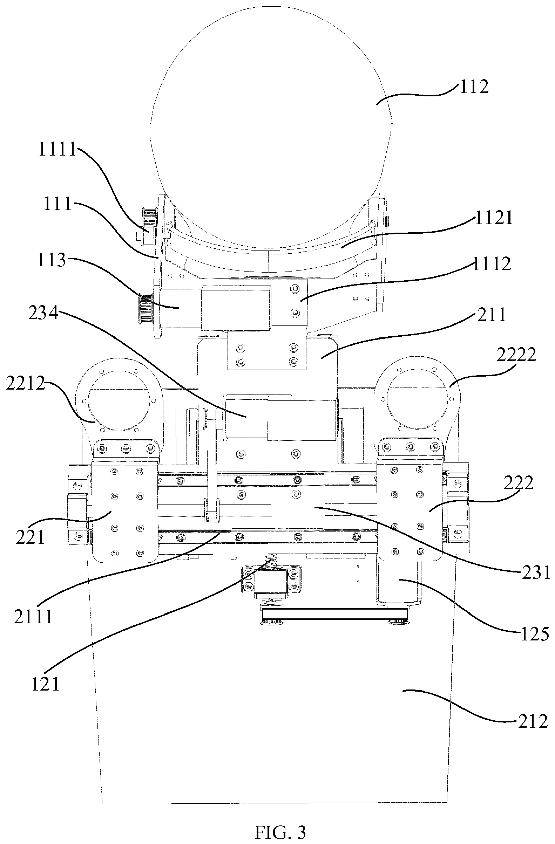

Referring to FIGS. 3 to 7, the shoulder width adjusting device 200 includes a back mechanism and a shoulder width adjusting mechanism. The back mechanism includes a first back plate 211. The right arm device 300 and the left arm device 400 are each movably connected to the first back plate 211. The shoulder width adjusting mechanism includes a shoulder width adjusting member. The shoulder width adjusting member is capable of driving the right arm device 300 or/and the left arm device 400 to move towards each other or away from each other, so as to adjust the shoulder width.

Referring to FIG. 3, the shoulder width adjusting device 200 further includes a shoulder mechanism, which includes a first shoulder plate 221 and a second shoulder plate 222. The first shoulder plate 221 and the second shoulder plate 222 are both movably connected to the first back plate 211. The right arm device 300 is disposed at the first shoulder plate 221, the left arm device 400 is disposed at the second shoulder plate 222. The shoulder width adjusting member drives the first shoulder plate 221 or/and the second shoulder plate 222 to move towards each other or away from each other, thus adjusting an interval between the right arm device 300 and the left arm device 400.

By driving the first shoulder plate 221 or/and the second shoulder plate 222 to move by the shoulder width adjusting member, the interval between the first shoulder plate 221 and the second shoulder plate 222 can be adjusted, thereby meeting the wear requirements of patients with different shoulder widths for subsequent rehabilitation.

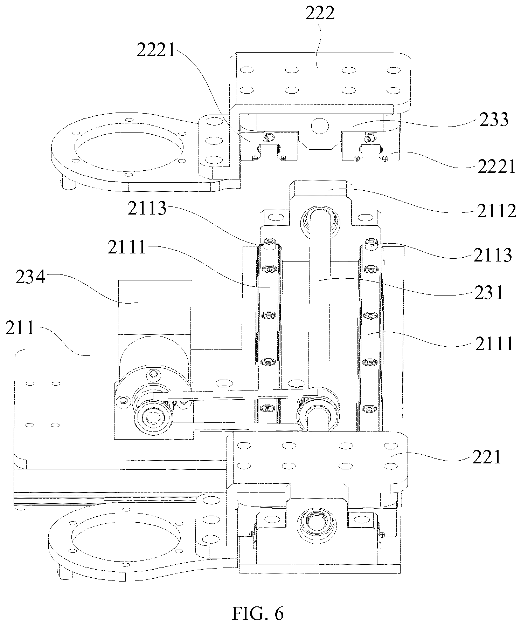

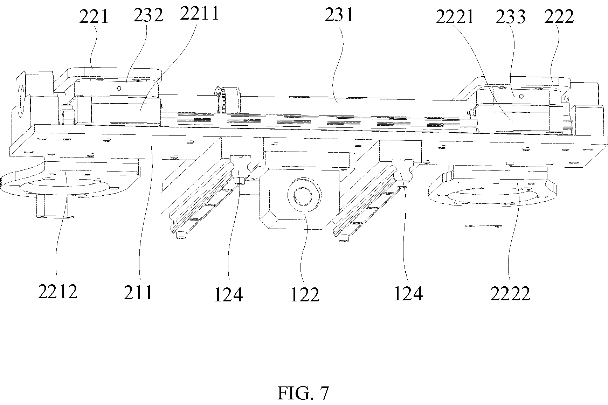

As shown in FIGS. 6 and 7, the first back plate 211 is provided with a shoulder width adjusting guide rail 2111. The first shoulder plate 221 is provided with a first shoulder width slider 2211 mating the shoulder width adjusting guide rail 2111. The second shoulder plate 222 is provided with a second shoulder width slider 2221 mating the shoulder width adjusting guide rail 2111.

The shoulder width adjusting member drives the first shoulder width slider 2211 to move along the shoulder width adjusting guide rail 2111, the shoulder width adjusting member drives the second shoulder width slider 2221 to move along the shoulder width adjusting guide rail 2111, such that the first shoulder plate 221 and the second shoulder plate 222 move towards each other or away from each other. When the first shoulder plate 221 and the second shoulder plate 222 move towards each other, the shoulder width becomes smaller; when the first shoulder plate 221 and the second shoulder plate 222 move away from each other, the shoulder width is larger, such that the shoulder widths can be adjusted for the use of patients with different shoulder widths.

As shown in FIGS. 6 and 7, the first back plate 211 is provided with a shoulder width adjusting base 2112. The shoulder width adjusting member includes a shoulder width adjusting screw 231 rotatably disposed on the shoulder width adjusting base 2112. The shoulder width adjusting screw 231 is provided with a left-hand threaded section and a right-hand threaded section. The shoulder width adjusting mechanism further includes a first shoulder width adjusting nut 232 and a second shoulder width adjusting nut 233. The first shoulder width adjusting nut 232 is disposed on the first shoulder plate 221 and engaged with the left-hand threaded section, and the second shoulder width adjusting nut 233 is disposed on the second shoulder plate 222 and engaged with the right-hand threaded section.

When the shoulder width adjusting screw 231 rotates, the first shoulder width adjusting nut 232 and the second shoulder width adjusting nut 233 correspondingly move towards each other or away from each other due to the left-hand threaded section and the right-hand threaded section thereon, such that the shoulder plate 221 and the second shoulder plate 222 are driven to move towards each other or away from each other.

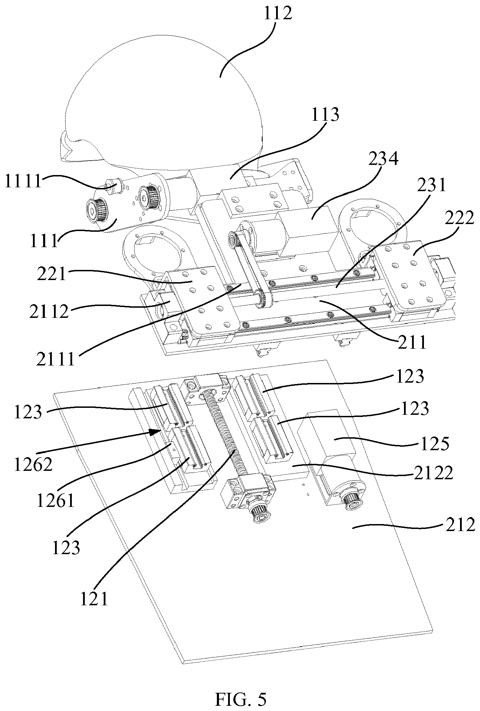

The shoulder width adjusting screw 231 may be adjusted manually, or may also be driven to rotate by a driving means. For example, as shown in FIGS. 5 and 6, the shoulder width adjusting mechanism further includes a shoulder width adjusting driver 234 for driving the shoulder width adjusting screw 231 to rotate. The shoulder width adjusting driver 234 is fixed to the first back plate 211.The shoulder width adjusting driver 234 may be a motor or other structure capable of implementing the driving. As shown in FIGS. 5 and 6, the shoulder width adjusting driver 234 transmits the drive torque to the shoulder width adjusting screw 231 by the mating of synchronous wheel and belt.

In an alternative embodiment, the shoulder width adjusting member includes a left-hand adjusting screw and a right-hand adjusting screw. The first shoulder width adjusting nut 232 is disposed at the first shoulder plate 221 and engaged with threads of the left-hand adjusting screw, and the second shoulder width adjusting nut 233 is disposed at the second shoulder plate 222 and engaged with threads of the right-hand adjusting screw. At this time, the left-hand adjusting screw and the right-hand adjusting screw may be rotated manually, and of course, two driving means may be provided to drive the left-hand adjusting screw and the right-hand adjusting screw, respectively.

As shown in FIG. 6, the shoulder width adjusting guide rail 2111 is provided with at least one shoulder width adjusting stopper 2113. The shoulder width adjusting stopper 2113 can restrict the amplitude of movement of the first shoulder width slider 2211 and the second shoulder width slider 2221 on the shoulder width adjusting guide rail 2111. Meanwhile, an accidental start or over-adjustment of the shoulder width adjusting driver 234 during use can be avoided, thus ensuring the safety of use. Further, the shoulder width adjusting stopper 2113 may be a shoulder width adjusting screw fixed to the shoulder width adjusting guide rail 2111.

Through the disposition of the shoulder width adjusting device 200, the rehabilitation robot 10 is capable of adjusting an interval between the right arm and the left arm thereof according to different shoulder widths conditions of patients, thereby allowing the rehabilitation robot to fit well with the patient, improving the rehabilitation therapy effect and improving the patient's therapy experience. In other words, the rehabilitation robot 10 is capable of meeting the use of rehabilitation of patients with different shoulder widths.

Referring to FIGS. 3 to 7, the head device 100 includes a helmet mechanism and a head adjusting mechanism. The helmet mechanism is disposed at the first back plate 211. The back mechanism further includes a second back plate 212 movably connected to the first back plate 211. The head adjusting mechanism is capable of driving the first back plate 211 to move on the second back plate 212, so as to adjust the position of the helmet mechanism relative to the second back plate. For example, the head adjusting mechanism is capable of driving the first back plate 211 to move upward and downward or left and right relative to the second back plate 212, however, the present disclosure is not limited thereto.

The head adjusting mechanism includes a head adjusting screw 121, a head adjusting nut 122, a head adjusting guide rail 123, a head adjusting slider 124, and a first head driver 125. Both of the head adjusting screw 121 and the head adjusting guide rail 123 are disposed on the second back plate 212. Both of the head adjusting nut 122 and the head adjusting slider 124 are disposed on the first back plate 211. The head adjusting screw 121 is threadedly engaged with the head adjusting nut 122. The head adjusting slider 124 is slidably disposed on the head adjusting guide rail 123.

The first head driver 125 can drive the head adjusting screw 121 to rotate, such that the head adjusting nut 122 moves in an axis direction of the head adjusting screw 121, thereby driving the first back plate 211 to move up and down. Since the helmet mechanism is disposed on the first back plate 211, the position of the helmet mechanism can be adjusted by the first back plate 211, and thus the function of adjusting a length of a neck or a height of the helmet mechanism can be implemented.

Of course, in an alternative embodiment, the first head driver 125 may drive the head adjusting screw 121 by a synchronous wheel and belt component, and the redundant description thereof will not be further described herein.

As shown in FIG. 5, the second back plate 212 is further provided with a mounting base 2122 for mounting the head adjusting guide rail 123. The mounting base 2122 is provided with an anti-waggling groove 1262 and an anti-waggling slider 1261. The anti-waggling slider 1261 can be selectively fixed into the anti-waggling groove 1262 and protrudes from the anti-waggling groove 1262. One side of the anti-waggling slider 1261 abuts against a sidewall of the anti-waggling groove 1262, the other side of the anti-waggling slider 1261 abuts against the head adjusting guide rail 123.

Since waggling may occur during mounting of the head adjusting guide rail 123 or during use, the anti-waggling slider 1261 can abut against the head adjusting guide rail 123, so as to prevent the waggling of the head adjusting guide rail 123, thus the stability is improved. When maintenance or the like is required, the anti-waggling slider 1261 can be removed from a current place, and moves and fixed to a proper position of the anti-waggling groove 1262, thus further improving the anti-waggling effect.

As shown in FIGS. 3 to 5, the helmet mechanism includes a helmet mounting stand 111, a helmet body 112, and a second head driver 113 for driving the helmet body 112 to rotate.

The helmet mounting stand 111 is fixed to the first back plate 211, the helmet body 112 is rotatably connected to the helmet mounting stand 111. The second head driver 113 is disposed on the helmet mounting stand 111 or the first back plate 211. The second head driver 113 can drive the helmet body 112 to move up and down on the helmet mounting stand 111, so as to achieve nodding of the helmet body 112. Of course, the second head driver 113 can also drive the helmet body 112 to waggle side to side on the helmet mounting stand 111, so as to achieve shaking of the helmet body 112.

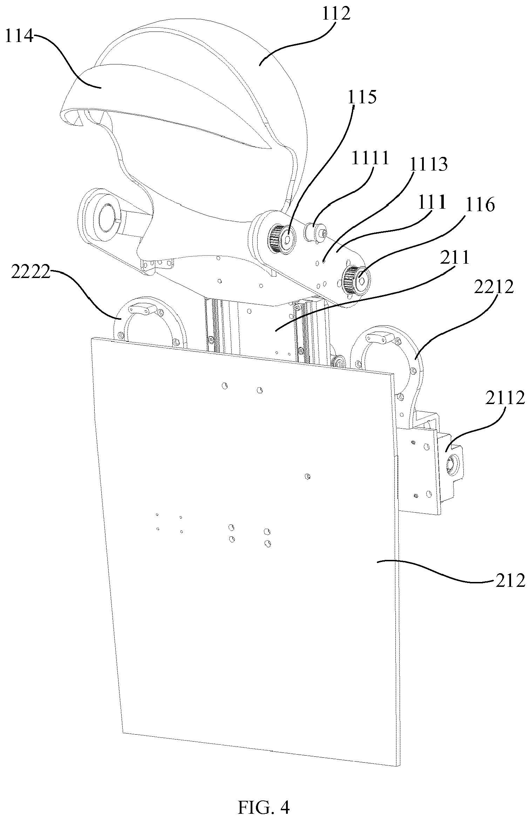

The helmet mechanism further includes a helmet fixing ring 1121. The helmet body 112 is fixed to the helmet fixing ring 1121. The helmet fixing ring 1121 is shaped as a semicircular ring. Both ends of the helmet fixing ring 1121 are rotatably connected to the helmet mounting stand 111. As shown in FIG. 4, the helmet mounting stand 111 is substantially U-shaped. As shown in FIG. 3, a middle portion of the U-shaped helmet mounting stand 111 is provided with a connecting plate 1112 for fixing to the first backing plate 211.

In addition, as shown in FIG. 4, the helmet mechanism further includes a helmet strap 114 disposed on the helmet body 112 for easy wearing.

Referring FIGS. 4 and 5, the helmet mechanism further includes a helmet synchronous wheel 115, a head driving synchronous wheel 116 and a helmet driving synchronous belt (not shown). The helmet driving synchronous belt is wound on the helmet synchronous wheel and the head driving synchronous wheel, and the helmet body 112 is provided with a helmet mounting shaft rotatably connected to the helmet mounting stand 111. The helmet synchronous wheel is fixed to the helmet mounting shaft, and the helmet driving synchronous wheel is disposed on the second head driver 113.

Since the helmet driving synchronous belt may loosen after being used for a period of time, the helmet mounting stand 111 is further provided with a head tensioning roller 1111 for tensioning the helmet driving synchronous belt. The helmet mounting stand 111 is further provided with at least two head tensioning mounting holes 1113 for mounting the head tensioning roller 1111. When the head tensioning roller 1111 cannot achieve a predetermined tensioning effect, the head tensioning roller 1111 can be removed from one head tensioning mounting hole and mounted to another head tensioning mounting hole to further achieve a better tensioning effect. Further, the at least two head tensioning mounting holes are arranged at an interval.

As shown in FIG. 5, the first shoulder plate 221 is provided with a first shoulder arm mounting plate 2212 for connecting the right arm device 300. The second shoulder plate 222 is provided with a second shoulder arm mounting plate 2222 for connecting the left arm device 400.

Since the left arm device 400 and the right arm device 300 have a symmetrical configuration, only the right arm device 300 will be described as an example for ease of the illustration.

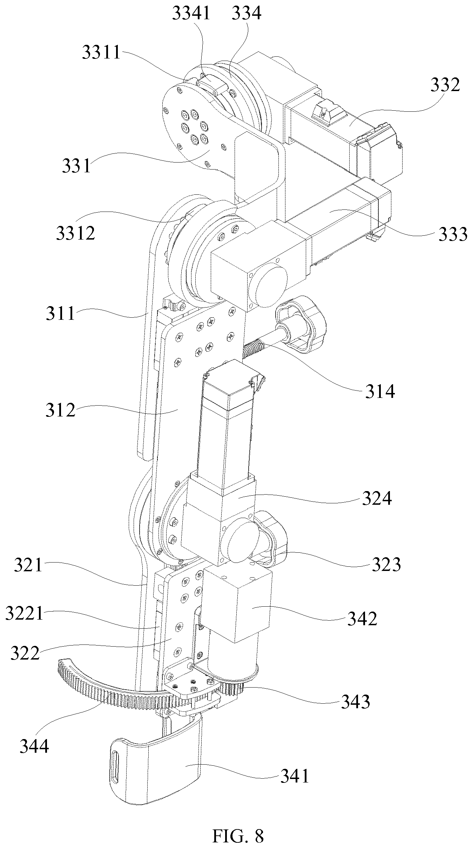

As shown in FIG. 8, the right arm device 300 includes an upper arm mechanism and a lower arm mechanism. The upper arm mechanism includes an upper arm plate 311 and an upper arm adjusting plate 312. The lower arm mechanism includes a lower arm plate 321, and one end of the lower arm plate 321 is rotatably connected to one end of the upper arm adjusting plate 312.

The upper arm adjusting plate 312 is movably connected to the upper arm plate 311 and capable of moving along the upper arm plate 311, thus adjusting length of the upper arm mechanism. Since different patients have different arm lengths, and when the patients use the right arm device 300 to perform the passive movement of the arm for rehabilitation, the wearing may be inconvenient or even impossible, which results in poor rehabilitation experience of the patient and failure of passive therapy. In the present embodiment, the upper arm adjusting plate 312 can move along the upper arm plate 311 to achieve the arm length adjustment of the upper arm mechanism, such that the wearing requirements of patients with different arm lengths are met, and the same right arm device 300 can be used for different patients to complete the wearing and the rehabilitation therapy, which greatly reduces the therapy cost compared to the conventional customized method.

Both of the left arm length and the right arm length of the rehabilitation robot 10 may be adjusted, and thereby meeting the uses of it fitted to patients with different arm lengths, allowing it to fit well with the patient.

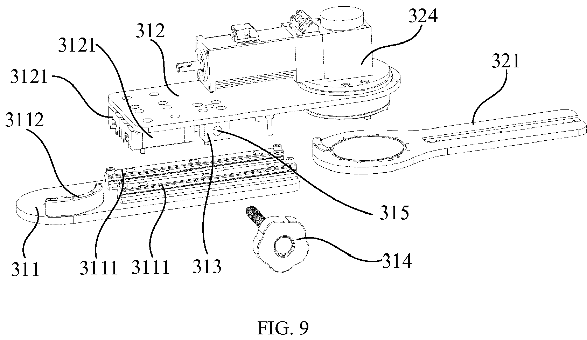

As shown in FIG. 9, the upper arm plate 311 is provided with an upper arm sliding guide rail 3111 extending in a length direction of the upper arm plate 311. The upper arm adjusting plate 312 is provided with an upper arm slider 3121, which is slidably mates with the upper arm sliding guide rail 3111. The upper arm slider 3121 can move along the upper arm sliding guide rail 3111, thereby achieving the moving operation between upper arm adjusting plate 312 and the upper arm plate 311, and then the retractable length adjustment of the upper arm mechanism is realized.

The upper arm mechanism further includes an upper arm locking slider 313 slidably mating with the upper arm sliding guide rail 3111. The upper arm locking slider 313 is fixed on the upper arm adjusting plate 312. The upper arm locking slider 313 is provided with an upper arm locking threaded hole 315. The upper mechanism further includes an upper arm locking member 314 threadedly engaged with the upper arm locking threaded hole. When adjusting to a proper upper arm length, the position between the upper arm adjusting plate 312 and upper arm adjusting plate 312 is locked by manually rotating the upper arm locking member 314 to extend into the upper arm locking threaded hole and abut against the upper arm sliding guide rail 3111 closely.

Of course, in an alternative embodiment, the upper arm locking threaded hole can be disposed on the upper arm slider 3121. When the upper arm adjusting plate 312 is adjusted to a certain position, the upper arm locking member 314 is rotated to abut against the upper arm sliding guide rail 3111, and thus the technical effect of locking is achieved.

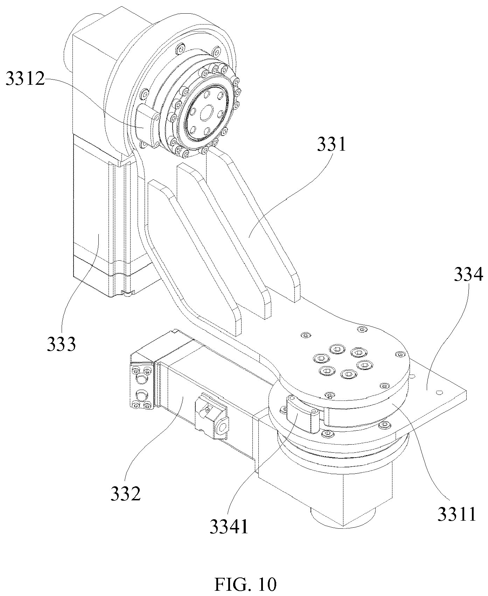

As shown in FIGS. 8 and 10, the right arm device 300 further includes an upper arm wiggling mechanism. The upper arm wiggling mechanism includes an upper arm wigging bracket 331, a first upper arm driver 332, and a second upper arm driver 333. The first upper arm driver 332 is used to drive the upper arm wigging bracket 331 to rotate, thus implementing the inward-outward wiggling motion of the upper arm mechanism. The upper arm plate 311 is rotatably disposed on the upper arm wigging bracket 331. The second upper arm driver 333 is disposed on the upper arm wigging bracket 331 and used to drive the upper arm plate 311 to rotate, thus implementing the forward-backward wiggling motion of the upper arm mechanism. A rotation axis of the upper arm wigging bracket 331 forms an angle with a rotation axis of the upper arm plate 311.

Further, the upper arm wigging bracket 331 is a bended plate provided with three strengthening ribs, so as to meet the requirements of the movement strength.

In assembly, the right arm device 300 is connected to the shoulder width adjusting device 200 by the first shoulder arm mounting plate 2212. The left arm device 400 is connected to the shoulder width adjusting device 200 by the second shoulder arm mounting plate 2222.

As shown in FIGS. 8 and 10, the upper arm wiggling mechanism further includes an arm connecting plate 334 fixed to the first shoulder arm mounting plate 2212. The upper arm wigging bracket 331 is rotatably disposed on the arm connecting plate 334. The upper arm wigging bracket 331 is further provided with a first upper arm arc-shaped strip 3311. The arm connecting plate 334 is further provided with a first upper arm stopper 3341. The upper arm wigging bracket 331 rotates and drives the first upper arm arc-shaped strip 3311 to rotate. The first upper arm stopper 3341 can stop the rotation of the first upper arm arc-shaped strip 3311 by abutting against an end of the arc-shaped strip 3311.

The right arm device 300 or the left arm device 400 can be used for assisting the patient to perform exercises of passive physical stretching out and drawing back or bending exercise. The robot may cause problems due to various unpredictable causes, such as excessive exercise, which may cause accidental injury or serious accident to the patient. Therefore, the first upper arm stopper 3341 and the first upper arm arc-shaped strip 3311 are provided. When the first upper arm driver 332 drives the upper arm wigging bracket 331 to rotate, the first upper arm arc-shaped strip 3311 is driven to rotate simultaneously. When the rotation reaches a certain amplitude or accidentally reaches to an unintended amplitude, the first upper arm stopper 3341 can perform a restricting function by abutting against the end of the first upper arm arc-shaped strip 3311. Due to the disposition of structure with an arc-shaped strip, a restricting function can be performed when the positive rotation proceeds as well as the negative rotation.

As shown in FIGS. 8 and 9, the upper arm wigging bracket 331 is provided with a second upper arm stopper 3312, the upper arm plate 311 is provided with a second upper arm arc-shaped strip 3112. The upper arm plate 311 rotates and drives the second upper arm arc-shaped strip 3112 to rotate, the second upper arm stopper 3312 can stop the rotation of the second upper arm arc-shaped strip 3112 by abutting against an end of the second upper arm arc-shaped strip 3112.

As shown in FIGS. 8, 9 and 11, the lower arm mechanism further includes a lower arm adjusting plate 322. The lower arm adjusting plate 322 is provided with a lower arm slider 3221. The lower arm plate 321 is provided with a lower arm sliding rail 3211 slidably mating with the lower arm slider 3221. The lower arm mechanism further includes a lower arm locking member 323. The lower arm mechanism further includes a lower arm driver 324, the lower arm driver 324 is disposed on the upper arm adjusting plate 312 and used for driving the lower arm plate 321 to rotate.

The lower arm driver 324 drives the lower arm plate 321 to rotate, so as to realize an elbow joint rotation of the right arm device 300. Similarly, the lower arm plate 321 and the upper arm adjusting plate 312 are provided with a stopper and a restrictor arc-shaped strip to perform the restricting function.

Further, the lower arm locking member 323 is a locking bolt, and it has the same operating principle as that of the upper arm locking member 314, and the redundant description thereof will not be further described herein.

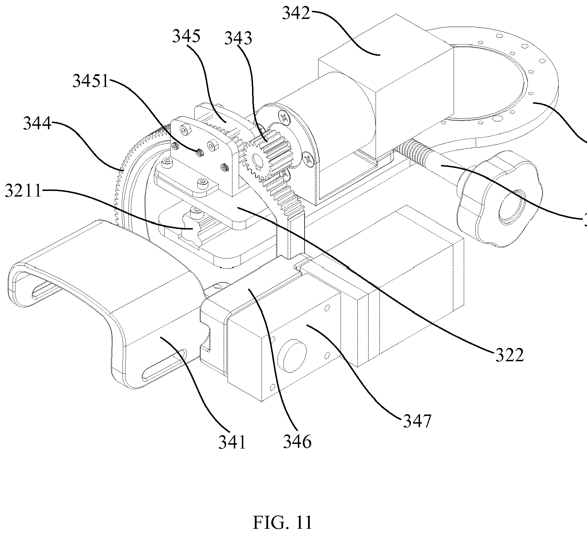

As shown in FIGS. 8 and 11, the right arm device 300 further includes a wrist mechanism. The wrist mechanism includes a wrist plate 341 disposed on or fixed to the lower arm adjusting plate 322 and a first wrist driver 342 driving the wrist plate 341 to rotate.

The wrist plate 341 is provided to have a structure with a U-shaped plate, so as to fix the palm of a patient. The first wrist driver 342 is fixed on the lower arm adjusting plate 322. The first wrist driver 342 can drive the wrist plate 341 to rotate, so as to realize an autorotation of the wrist plate 341 in a length direction of the palm of the patient.

As shown in FIGS. 8 and 11, the wrist mechanism further includes a wrist gear 343, a wrist arc-shaped rack 344, and a wrist rack mounting bracket 345. The wrist gear 343 is engaged with the wrist arc-shaped rack 344. The wrist arc-shaped rack 344 is slidably connected to the wrist rack mounting bracket 345. The first wrist driver 342 drives the wrist gear 343 to rotate and enable the wrist gear 343 to drive the wrist arc-shaped rack 344 to rotate around the wrist rack mounting bracket 345. The wrist plate 341 is disposed on the wrist arc-shaped rack 344.

The first wrist driver 342 drives the wrist gear 343 to rotate, and the wrist gear 343 drives the wrist arc-shaped rack 344 to rotate. In the meantime, the wrist arc-shaped rack 344 drives the wrist plate 341 located thereon to rotate.

As shown in FIG. 11, the wrist rack mounting bracket 345 is substantially U-shaped. The wrist rack mounting bracket 345 is provided with a groove having an arc surface matching with a rear surface of the wrist arc-shaped rack 344. The wrist rack mounting bracket 345 is further provided with a plurality of wrist restricting sliders 3451, and the plurality of wrist restricting sliders 3451 are arranged at an interval. The wrist arc-shaped rack 344 is provided with an arc-shaped rail matching with the wrist restricting slider 3451, thus restricting the moving track of the wrist arc-shaped rack 344.

Of course, in an alternative embodiment, the side wall of the groove of the wrist rack mounting bracket 345 is directly provided with an arc-shaped sliding groove, the side wall of the wrist arc-shaped rack 344 is provided with an arc-shaped slide rail corresponding to the arc-shaped sliding groove, so as to restrict the slipping track of the wrist arc-shaped rack 344 as well.

As shown in FIG 11, the wrist mechanism further includes a wrist mounting bracket 346 and a second wrist driver 347 disposed on the wrist mounting bracket 346. The wrist mounting bracket 346 is fixed on the wrist arc-shaped rack 344. The wrist plate 341 is rotatably disposed on the wrist mounting bracket 346. The second wrist driver 347 is used for driving the wrist plate 341 to rotate.

The wrist mounting bracket 346 may be fixed on the wrist arc-shaped rack 344. The wrist mounting bracket 346 is rotatably connected to the wrist plate 341. The second wrist driver 347 may drive the wrist plate 341 to rotate and realize the wiggling motion of the palm of the patient.

Of course, each of the above described drivers may be configured with structures such as reducers (tuned reducers), couplings, flanges and the like in the actual installation to meet actual needs, and the redundant description thereof will not be further described herein.

As shown in FIGS. 1 to 2, the lower limb rehabilitation device includes a right leg device 600 and a left leg device 700. Both of the right leg device 600 and the left leg device 700 are disposed on the second back plate 212.

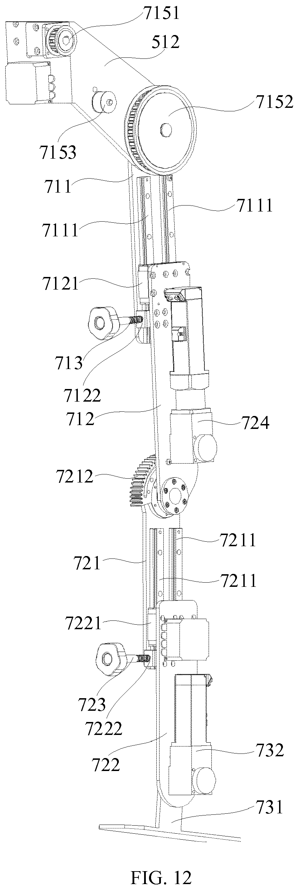

Since the left leg device 700 has the same structure as that of the right leg device 600, the left leg device 700 is taken as an example to be illustrated. As shown in FIGS. 12 to 15, the left leg device 700 includes a thigh mechanism and a shank mechanism.

The thigh mechanism including a thigh plate 711 and a thigh retractable plate 712. The thigh retractable plate 712 is capable of stretching out and drawing back along the thigh plate 711, so as to adjust the length of the thigh, and meet requirements of passive physical rehabilitation therapy of patients with different leg lengths. The shank mechanism includes a shank plate 721. An end of the shank plate 721 is rotatably connected to an end of the thigh retractable plate 712, so as to meet requirements of knee rehabilitation of the patient.

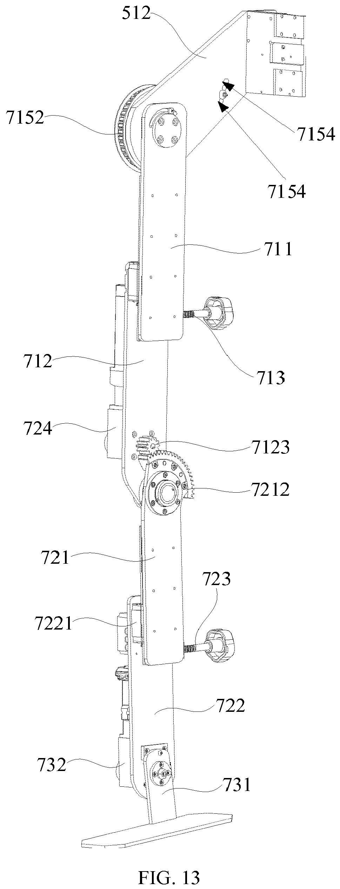

As shown in FIGS. 12 and 13, the thigh plate 711 is provided with a thigh sliding rail 7111. The thigh retractable plate 712 is provided with a thigh slider 7121 matching with the thigh sliding rail 7111. The thigh mechanism further includes a thigh locking member for locking the position between the thigh retractable plate 712 and the thigh plate 711.

In addition, the retractable movement between the thigh retractable plate 712 and the thigh plate is realized by the slide mating between the thigh slider 7121 and the thigh sliding rail 7111, so as to adjust the length of the thigh portion, and meet the uses of it fitted to patients with different leg lengths. The extra retractable movement is avoided by locking the thigh retractable plate 712 on the thigh plate through the thigh locking member after the adjusting is completed.

The thigh retractable plate 712 is further provided with a thigh locking slider 7122. The thigh locking slider 7122 is provided with a thigh locking threaded hole. The thigh locking member includes a thigh locking bolt 713 engaged with the threads of the thigh locking threaded hole.

The thigh locking slider 7122 is fixed on the thigh retractable plate 712. When adjusting the thigh retractable plate 712, the thigh locking slider 7122 slides on the thigh sliding rail 7111. After the position adjustment is completed, the thigh locking bolt 713 is rotated, such that one end of the thigh locking bolt 713 abuts against the thigh sliding rail 7111 tightly, so as to achieve fastening and locking.

The thigh mechanism further includes a thigh driver 714. The thigh driver 714 drives the thigh plate to rotate, thereby realizing bowing motion. In addition, the thigh mechanism further includes a first thigh synchronization wheel 7151, a second thigh synchronization wheel 7152, a thigh synchronization belt, and a thigh tensioning roller 7153. The thigh synchronization belt is wound around the first thigh synchronization wheel 7151 and the second thigh synchronization wheel 7152. The thigh driver 714 is also used to drive the first thigh synchronous wheel 7151 to rotate. The second thigh synchronous wheel 7152 is used to drive the thigh plate to rotate. The thigh tensioning roller 7153 is used to tension the thigh synchronization belt. Through the configuration of the synchronization wheel and belt, the thigh driver 714 transmits driving torque to the thigh plate and enables the thigh plate to rotate. The thigh tensioning roller 7153 functions as tensioning the thigh synchronization belt.

Similar to the thigh mechanism, the length of the shank portion may also be provided to be adjusted in a retractable method.

In detail, the shank mechanism further includes a shank retractable plate 722 and a shank locking member. The shank retractable plate 722 is provided with a shank slider 7221. The shank plate 721 is provided with a shank sliding rail 7211 slidably mates with the shank slider 7221. The shank locking member is used for locking the position between the shank retractable plate 722 and the shank plate 721.

The shank slider 7221 is provided with a shank locking threaded hole. The shank locking member includes a shank locking bolt 723 mating with the shank locking threaded hole. The shank locking bolt 723 is rotated such that an end of the shank locking bolt 723 abuts against the shank sliding rail 7211. With this configuration, the locking position between the shank retractable plate 722 and the shank plate 721 is realized.

For example, in an alternative embodiment, the shank retractable plate 722 may also be provided with a shank locking slider 7222. The shank slider 7221 slidably mates with the shank sliding rail 7211, the shank slider 7221 is provided with a shank locking threaded hole. The shank locking bolt 723 is threadedly engaged with the shank locking threaded hole, thus achieving locking.

The shank mechanism further includes a shank driver 724. The shank driver 724 drives the shank plate 721 to rotate, thereby realizing the knee joint rotation, that is, the knee flexing motion.

As shown in FIGS. 12 and 13, a shank gear 7123 is disposed on the thigh retractable plate 712. The shank plate 721 is fixed with a shank rack 7212. The shank rack 7212 engages with the shank gear 7123. The shank driver 724 is fixed on the thigh retractable plate 712 and drives the shank gear 7123 to rotate. The shank gear 7123 drives the shank rack 7212 to rotate, thereby enabling the shank rack 7212 to drive the shank plate 721 to rotate, realizing the knee flexing motion or the knee joint rotation.

As shown in FIGS. 12 and 13, the left leg device 700 further includes a foot mechanism. The foot mechanism includes a foot plate shelf 731 and a foot plate driver 732. The foot plate shelf 731 is rotatably connected to the shank retractable plate 722. The foot plate driver 732 is disposed on the shank retractable plate 722 and used for driving the foot plate shelf 731 to rotate.

The foot plate shelf 731 includes a bracket portion rotatably connected to the shank retractable plate 722 and a foot plate portion for fixing the patient's foot portion. The bracket portion and the foot plate portion are fixed at an angle or provided integrally at an angle, and the redundant description thereof will not be further described herein.

Since when the foot plate driver 732 drives the foot plate shelf 731 to rotate, if it is excessively rotated or failure occurs in the system, it may cause catastrophic consequences, the shank retractable plate 722 is provided with a foot arc-shaped groove, and the foot plate shelf 731 is provided with a foot stopper disposed to correspond to the foot arc-shaped groove and be capable of slipping along the foot arc-shaped groove, such that the foot stopper mates with the foot arc-shaped groove and performing the restriction, which not only functions as restricting the moving track of the foot plate shelf 731, but also avoids the occurrence of cases of excessive rotation, accidents or the like in the meantime, thereby securing the safe use.

For example, the foot stopper is a stop screw or a stop block.

The foot mechanism enables the patient's foot to undergo passive exercise rehabilitation therapy. The patient's foot is fixed on the foot plate shelf 731, and the patient's foot is wiggled by the driving of the foot plate driver 732, thereby achieving passive physical rehabilitation exercise.

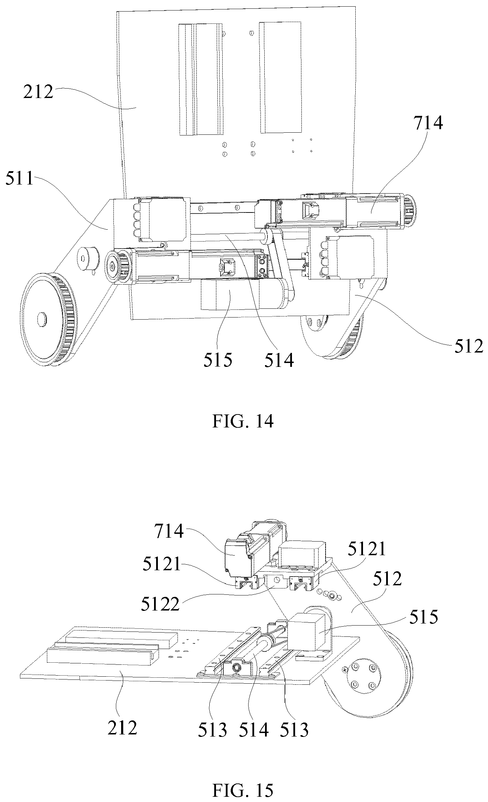

Referring to embodiments as shown in FIGS. 14 and 15, the lower limb rehabilitation device further includes a hip device 500 for adjusting a width of the hip.

As shown in FIGS. 14 and 15, the hip device 500 includes a hip mechanism. The hip mechanism includes a first hip plate 511 and a second hip plate 512. In addition, as shown in FIG. 13, the thigh plate may be provided with an arc-shaped groove, and the second hip plate 512 is disposed with a stopper mating with the arc-shaped groove, to function as restricting the amplitude of rotation of the thigh plate, so as to secure the safety use. The thigh plate of the right leg device 600 is a right thigh plate. The right thigh plate is rotatably connected to the first hip plate 511. The thigh plate of the left leg device 700 is a left thigh plate 711. The left thigh plate 711 is rotatably connected to the second hip plate 512.

As shown in FIGS. 12 to 15, both of the first hip plate 511 and the second hip plate 512 are both bending plates, for ease of installing and mating. Since the tensioning force may be deteriorated after working for a period time, the second hip plate 512 is further provided with at least one thigh tensioning mounting hole 7154 for installing the thigh tensioning roller 7153. One thigh tensioning roller 7153 is arranged only. The thigh tensioning roller 7153 can be removed from a current place, and moves and fixed into another thigh tensioning mounting hole 7154, thereby improving the tensioning effect, and the redundant description thereof will not be further described herein.

As shown in FIGS. 1, 14, and 15, the hip mechanism further includes a first hip sliding rail 513 disposed on the second back plate 212 of the shoulder width adjusting device 200. The first hip plate 511 is provided with a first hip slider. The first hip slider slips along the first hip sliding rail 513 and adjusts the interval between the first hip plate 511 and the second hip plate 512, such that the width of the hip device 500 is adjusted, thereby meeting the use of it fitted to patients with different hip widths.

In an alternative embodiment, the shoulder width adjusting device 200 includes the second back plate 212, the hip mechanism further includes a second hip sliding rail 513 disposed on the second back plate 212, and the second hip plate 512 is provided with a second hip slider 5121. The second hip slider 5121 slips along the second hip sliding rail 513 and adjusts the interval between the first hip plate 511 and the second hip plate 512.

The adjustment may be carried out by means of driving movement between the drives, or it may also be carried out by means of driving movement that is realized by driving the screw nut mechanism to collaborate with it through the driver, and the redundant description thereof will not be further described herein.

Of course, the first hip plate 511 and the second hip plate 512 may move towards to each other or away from each other, and the structure for locking after the adjustment may be provided based on this principle, by those skilled in the art.

As shown in FIGS. 14 and 15, the hip mechanism further includes the hip sliding rail 513 disposed on the second back plate 212 of the shoulder width adjusting device 200. The first hip plate 511 is provided with a first hip slider slidably mating with the hip sliding rail 513. The second hip plate 512 is provided with the second hip slider 5121 slidably mating with the hip sliding rail 513. The hip mechanism further includes a hip screw 514 disposed on the second back plate 212. The hip screw 514 is provided with a hip left-hand threaded section and a hip right-hand threaded section. The first hip plate 511 is further provided with a first hip nut engaged with threads of the hip left-hand threaded section, and the second hip plate 512 is further provided with a second hip nut 5122 engaged with threads of the hip right-hand threaded section. The hip screw 514 is rotated and drives the first hip nut and the second hip nut 5122 to move, and adjusts the interval between the first hip plate 511 and the second hip plate 512.

The hip screw 514 is rotated to drive the first hip nut and the second hip nut 5122 to move, thereby driving the first hip plate 511 and the second hip plate 512 to move. Since the first hip nut is engaged with the hip left-hand threaded section and the second hip nut 5122 is engaged with the hip left-hand threaded section, the movement of the first hip nut and the second hip nut 5122 towards each other or away from each other may be realized, when the hip screw 514 is rotated in the forward or reverse direction, so as to drive the first hip plate 511 and the second hip plate 512, to move towards each other or away from each other, and thus the hip width is adjusted.

As shown in FIGS. 14 and 15, the hip screw 514 is rotatably disposed on the back plate 212. The two hip sliding rails 513 are provided at an interval. Two first hip slider and two second hip slider 5121 are respectively arranged for an engagement with the hip sliding rail 513.

Of course, the rotation of the hip screw 514 may be adjusted manually. The hip screw 514 may also be provided to drive the rotate a hip width adjusting driver 515. As shown in FIG. 14, the hip width adjusting driver 515 may be further configured to perform driving by means of a synchronization belt structure, and the redundant description thereof will not be further described herein.

The right leg device 600 and the left leg device 700 are engaged with the hip device 500 to form the lower limb rehabilitation device of the rehabilitation robot 10, so as to fit well with patients with different leg lengths for rehabilitation therapy.

In an embodiment, an airbag device may be disposed on the rehabilitation robot 10 and include an upper limb airbag mechanism and a lower limb airbag mechanism.

The upper limb airbag mechanism includes an upper arm airbag 911 and a lower arm airbag 912. The upper arm airbag 911 and lower arm airbag 912 are disposed on the right arm device 300 and the left arm device 400, respectively. In other words, the upper arm airbag 911 is disposed on the corresponding upper arm mechanism, the lower arm airbag 912 is disposed on the corresponding lower arm mechanism.

The upper limb airbag mechanism further a torso airbag 913. The upper arm airbags 911 of the right arm device 300 and the left arm device 400 are disposed on the right and left sides of the torso airbag 913, respectively.

The lower limb airbag mechanism includes a thigh airbag 921 and a shank airbag 922. The thigh airbag 921 and the shank airbag 922 are disposed on the right leg device 600 and the left leg device 700, respectively. In other words, the thigh airbag 921 is disposed on the corresponding thigh mechanism, and the shank airbag 922 is disposed on the corresponding shank mechanism.

The airbag device further includes an airbag connector 930 (such as an airbag connection locking ring) for connecting the upper arm airbag 911 to the lower arm airbag 912 (or the thigh airbag 921 and the shank airbag 922).

When performing the rehabilitation therapy for the patient, the upper limb airbag mechanism is closely attached to the patient's arm and upper limb torso portion, and the massage operation for the upper limb body of the patient is realized through the operation of inflation and deflation of the airbag. At the same time, the rehabilitation robot is well fitted with the patients with different body shape by filling with and releasing gas. The lower limb airbag mechanism is closely attached to the thigh of the patient, the massage operation for the lower limb body of the patient is realized through the operation of inflation and deflation of the airbag, and the redundant description thereof will not be further described herein.

Further, the airbag device further includes an airbag inflation mechanism for filling with and releasing the gas. The airbag inflation mechanism includes an inflator 940 and an inflatable pipe, so as to perform the operation of inflation and deflation.

For example, the airbag inflation mechanism further includes a heat exchanger capable of supplying cold or hot air, so as to further perform the therapy for the patient by the operation of supplying cold or hot air. For example, the purpose of maintaining the body temperature of the patient is achieved, and the redundant description thereof will not be further described herein.

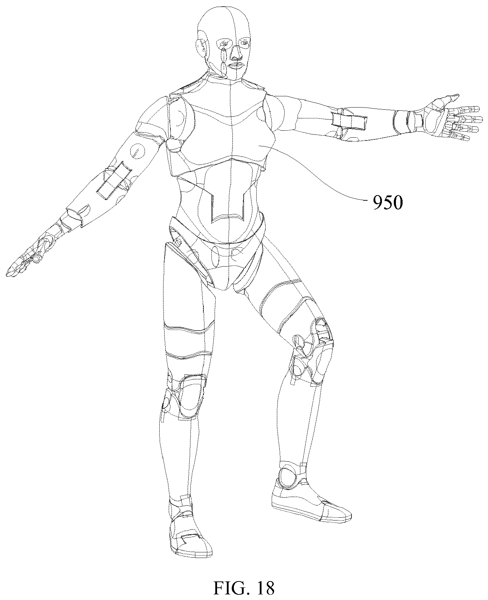

As shown in FIG. 18, the rehabilitation robot may further include an armor 950. The upper limb airbag mechanism and the lower limb airbag mechanism may be disposed on the corresponding position of the armor 950, or disposed on other position, and the redundant description thereof will not be further described herein.

Through the collaboration of the head device 100, the shoulder width adjusting device 200, the right arm device 300, the left arm device 400, the hip device 500, the right leg device 600 and the left leg device 700 of the rehabilitation robot 10,, all of the head, upper limb and lower limb of patients can be performed with a rehabilitation therapy.

In an embodiment, the present disclosure provides a rehabilitation system. The rehabilitation system may include the rehabilitation robot 10. However, the present disclosure is not limited thereto.

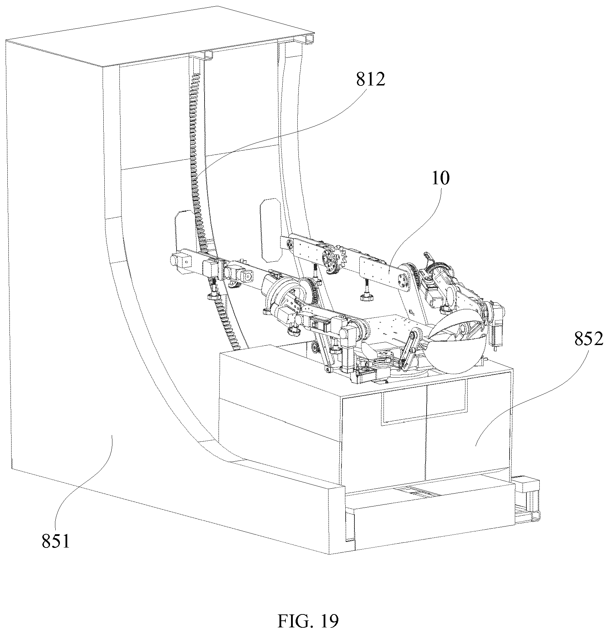

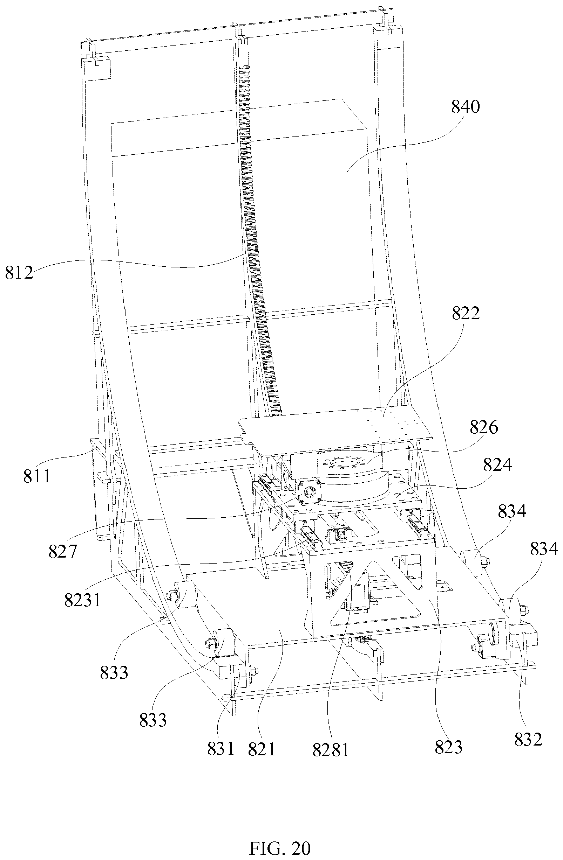

For example, as shown in FIGS. 19 and 20, the rehabilitation system may further include a rehabilitation bed device 800 including a bed mechanism. The bed mechanism includes a bed base 811, a bed adjustable shelf 821 and a bed body 822. The bed base 811 is provided with a bed arc-shaped rail. The bed adjustable shelf 821 is capable of moving along the bed arc-shaped rail. The bed body 822 is movably connected to the bed base 811 and disposed on the bed adjustable shelf 821. The rehabilitation robot 10 is detachably disposed on the bed body 822.

As shown in FIGS. 19 to 21, when the bed adjustable shelf 821 moves on the bed arc-shaped rail, since it needs to move upwards, the cases of rolling over or falling off from the bed arc-shaped rail may occur. Therefore, the rehabilitation bed device 800 further includes an anti-fall mechanism. The anti-fall mechanism is disposed on the bed mechanism and used for preventing the bed adjustable shelf 821 from falling off the bed arc-shaped rail. Through the disposition of the anti-fall mechanism, and the anti-fall mechanism is disposed on the bed adjustable shelf 821, the anti-fall mechanism and the bed arc-shaped rail are movably connected therebetween, and thus the anti-fall mechanism is also slidably or scrollable engaged with the bed arc-shaped rail when the bed adjustable shelf 821 moves along the bed arc-shaped rail. In the meantime, the anti-fall mechanism and the bed adjustable shelf 821 are in a restricting collaboration therebetween, for avoiding falling-off of the bed adjustable shelf 821 from the bed arc-shaped rail, such that the overall operation is more stable and reliable, and the safety of use of it fitted to the patient is secured.

Therefore, when the patient is placed on the bed body 822, the disposition of the anti-fall mechanism prevents the bed adjustable shelf 821 from falling off from the bed arc-shaped rail, safety is improved, and thereby enabling the patient to follow the bed body 822 to move in the space, realizing auxiliary rehabilitation therapy for the patient and reducing the workload of the nursing worker.

As shown in FIG. 20, the bed base 811 is further provided with a first anti-fall rail 831 and a second anti-fall rail 832. The first anti-fall rail 831 and the second anti-fall rail 832 are provided to have an interval therebetween. The anti-fall mechanism includes the first anti-fall member and the second anti-fall member. The first anti-fall member is in a restricting engagement with the first anti-fall rail 831 and capable of moving along the first anti-fall rail 831. The second anti-fall member is in a restricting engagement with the second anti-fall rail 832 and capable of moving along the second anti-fall rail 832.

The anti-fall is realized by a means of the restricting engagement with each other between the first anti-fall rail 831 and the second anti-fall member, which may be embodied in many ways. For example, the first anti-fall rail 831 may be an anti-fall rail groove, the second anti-fall member may be an anti-fall rail engaged with the anti-fall rail groove, and an occlusal structure is provided between the anti-fall rail groove and anti-fall rail, thereby functioning as restricting and falling-off preventing. The second anti-fall rail 832 have the same operational principle as that of the second anti-fall member, and the redundant description thereof will not be further described herein.

As shown in FIG. 20, the first anti-fall rail 831 includes a first arc-shaped plate provided with a first arc-surface and a second arc-surface. The first anti-fall member includes at least two first roller 833. At least one first roller 833 is in rolling engagement with the first arc-surface. At least one first roller 833 is in rolling engagement with the second arc-surface. The second anti-fall rail 832 includes a second arc-shaped plate. The second arc-shaped plate is provided with a third arc-surface and a fourth arc-surface. The second anti-fall member includes at least two second roller 834. At least one second roller 834 is in rolling engagement with the third arc-surface. At least one second roller 834 is in rolling engagement with the fourth arc-surface.

As shown in FIG. 20, the first anti-fall rail 831 and the second anti-fall rail 832 are disposed at two sides of the bed arc-shaped rail, respectively, to making the operation of the bed mechanism more stable and reliable. Both of arc-shaped tracks of the first arc-shaped plate and the second arc-shaped plate are provided to be in correspondence with the bed arc-shaped rail. When the bed adjustable shelf 821 moves along the bed arc-shaped rail, the first roller 833 is capable of being in rolling engagement with two sides (the first and second arc-surfaces) of the first arc-shaped plate. Through the clamping function of the rolling engagement on both sides of the first roller 833, it is not only realized the engagement with the moving of the bed adjustable shelf 821 along the bed arc-shaped rail, but also realized the occlusal function for the first arc-shaped plate simultaneously, thereby realizing restriction and falling-off prevention. The second anti-fall rail 832 has the same principle of engagement as that of the second roller 834, and the redundant description thereof will not be further described herein.

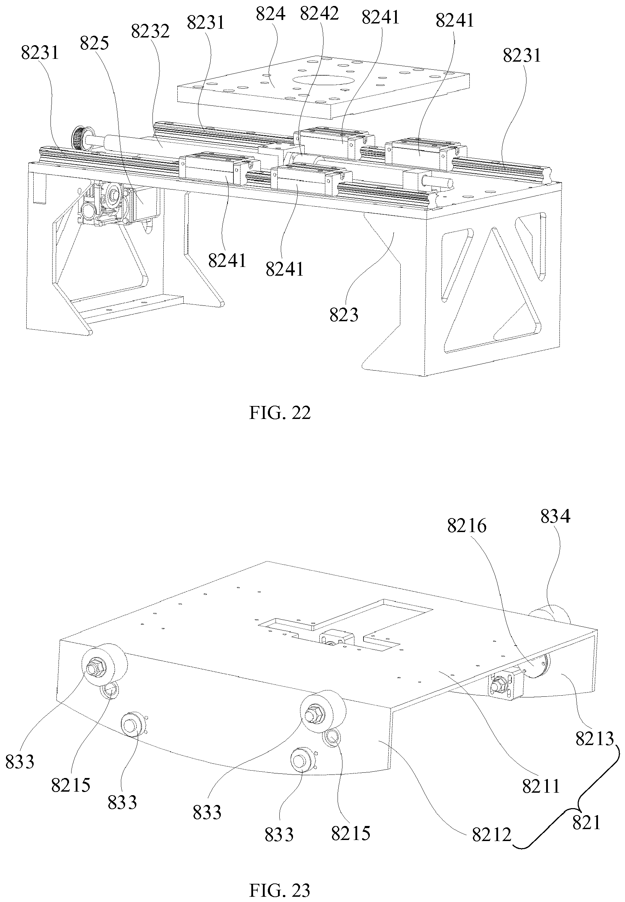

In an alternative embodiment, as shown in FIGS. 20 and 23, in a case of meeting the requirements, one first roller 833 and one second roller 834 are arranged respectively. The first roller 833 is in rolling engagement with the arc-surface of the first arc-shaped plate towards ground side. The second roller 834 is in rolling engagement with the arc-surface of the second arc-shaped plate towards the ground side. Since the bed adjustable shelf 821 is relatively at a side of the first arc-shaped plate or the second arc-shaped plate far away from the ground, when the bed adjustable shelf 821 is adjusted, the first roller 833 and the second roller 834 can realize the restriction and falling-off prevention as well, and the redundant description thereof will not be further described herein.

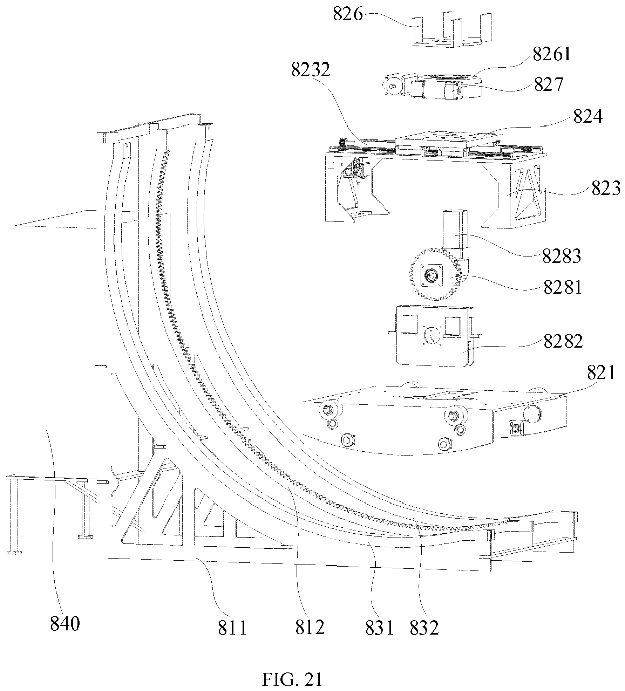

As shown in FIGS. 21 and 23, the bed adjustable shelf 821 includes a bed adjustable plate 8211, a first side plate 8212 and a second side plate 8213. The first side plate 8212 and the second side plate 8213 are disposed at opposite sides of the bed adjustable plate 8211, respectively. Both of the first side plate 8212 and the second side plate 8213 are disposed at an angle. The first roller 833 is disposed on the first side plate 8212, the second roller 834 is disposed on the second side plate 8213.

As shown in FIG. 23, the first side plate 8212 and the second side plate 8213 is fixed on the opposite sides of the bed adjustable plate 8211 at a right angle, respectively. Both of plate sides of the first side plate 8212 and the second side plate 8213 towards the ground side are provided to have an arc-surface, the arc-surface is provided to be in correspondence with the arc-surface of the bed arc-shaped rail (or the first or second arc-shaped plate) for a better collaborate exercise, solving problems of interference that may occur.

As shown in FIG. 23, the first side plate 8212 is provided with four scrollable first rollers 833. The second side plate 8213 is provided with four scrollable second rollers 834. The first roller 833 may adopt two specifications for engaging with the first and second arc-surfaces of the first arc-shaped plate. The second roller 834 may also adopt two specifications for engaging with the third and fourth arc-surfaces of the second arc-shaped plate, and the redundant description thereof will not be further described herein.

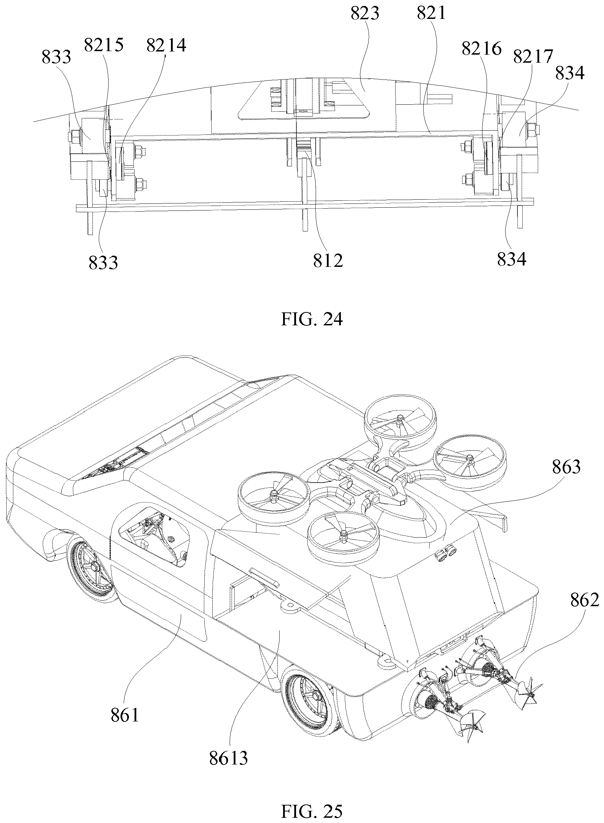

As shown in FIGS. 23 and 24, the first side plate 8212 is further provided with a first ball seat 8214 and a first ball bearing 8215 convexly disposed on the first ball seat 8214. The first ball bearing 8215 is in rolling engagement with the bed base 811. The second side plate 8213 is further provided with a second ball seat 8216 and a second ball bearing 8217 convexly disposed on the second ball seat 8216. The second ball bearing 8217 is in rolling engagement with the bed base 811.

When the bed adjustable shelf 821 moves by engaging with the bed arc-shaped rail, the derivation of movement may occur. For example, an offset toward the first side plate 8212 or second side plate 8213 may occur. At this time, the motion accuracy may be affected. Therefore, the first ball bearing 8215 and the second ball bearing 8217 are disposed on the first side plate 8212 and the second side plate 8213, respectively. When the bed adjustable shelf 821 offsets towards the first side plate 8212 side, the first ball bearing 8215 abuts against and is in rolling engagement with a side wall of the bed base 811. The reactive force may occur when abutting against, and thus the first ball bearing 8215 returns the bed adjustable shelf 821, so as to function as a certain adjustment, even if the bed adjustable shelf 821 is not returned. Since the first ball bearing 8215 is convexly disposed on the first ball seat 8214, the first side plate 8212 does not contact the bed base 811, such that friction affecting the movement of the bed mechanism is avoided, securing the normal operation. The second ball bearing 8217 and the second side plate 8213 have the same operational principle, and the redundant description thereof will not be further described herein.

As shown in FIG. 24, the first ball seat 8214 and the first ball bearing 8215 is provided in two set. The second ball seat 8216 and the second ball bearing 8217 is also provided in two set, so as to function as a better corrective adjustment and antifriction.

As shown in FIGS. 20 to 22, the bed adjustable plate 8211 is provided with a bed slipping rail 8231 and a bed screw 8232. The bed mechanism further includes a bed slipping plate 824 provided with a bed slider 8241 and a bed nut 8242. The bed slider 8241 is in rolling engagement with the bed slipping rail 8231. The bed nut 8242 is in rolling engagement with the bed screw 8232. The bed mechanism further includes a bed driver 825 driving the bed screw 8232 to rotate. The bed body 822 is disposed on the bed slipping plate 824.

As shown in FIGS. 22 and 23, a bed mounting shelf 823 is disposed on the bed adjustable plate 8211. Abed mounting platform plate is disposed on upper side of the bed mounting shelf 823. Two bed slipping rail 8231 are arranged at an interval and disposed on the bed mounting platform plate. The bed screw 8232 is provided between the two bed slipping rails 8231. A mounting base for installing the bed screw 8232 is further disposed on the bed mounting platform plate. A lower plate surface of the bed slipping plate 824 is provided with the bed nut 8242 and the bed slider 8241. When the first bed driver 825 drives the bed screw 8232 to rotate, the bed nut 8242 is driven to move in an axis direction of the bed screw 8232, so as to drive the bed slipping plate 824 to move, the bed slipping plate 824 is moved to drive the bed body 822 provided thereon to realize the position adjustment. The position adjustment may meet requirements of position adjustment of people with different heights in an auxiliary rehabilitation therapy.

Further, the bed slider 8241 is provided in plural. An occlusal structure is provided between slipping grooves of the bed sliders 8241 and the bed slipping rails 8231 to avoid the falling-off of the bed slider 8241 from the bed slipping rail 8231.

As shown in FIG. 22, the bed slipping rail 8231 is provided with a strip groove structure or a convex strip structure. The slipping groove of the bed slider 8241 corresponds to an occlusal device, for a better slipping, and further realizing the restriction and falling-off prevention, and the redundant description thereof will not be further described herein.

Further, the first bed driver 825 and the bed screw 8232 are connected by a synchronous belt therebetween. As shown in FIG. 22, the first bed driver 825 rotates, and drives the synchronous wheel disposed on one end of the bed screw 8232 by the synchronous belt. The synchronous wheel is rotated to drive the bed screw 8232 to rotate. Of course, any other method of realizing the rotation of the bed screw 8232 may also be used, and the redundant description thereof will not be further described herein.

As shown in FIGS. 20 and 21, the bed mechanism further includes a bed rotary table shelf 826 disposed on the bed slipping plate 824 and a second bed driver 827. The second bed driver 827 drives the bed rotary table shelf 826 to rotate. The bed body 822 is disposed on the bed rotary table shelf 826.

The bed body 822 is disposed on the bed rotary table shelf 826. The second bed driver 827 drives the bed rotary table shelf 826 to rotate, so as to drive the bed body 822 to implement the rotation, for further assisting the patient to have a rehabilitation therapy.

Further, the second bed driver 827 performs the driving by a structure of worm and worm gear. The second bed driver 827 drives the worm to rotate. The worm is in rotating engagement with the worm gear, while the bed rotary table shelf 826 is disposed on the worm gear, so as to rotate the bed rotary table shelf 826. In addition, a rotary table encloser 8261 may also be disposed at outside of the structure of worm and worm gear, so as to function as protecting the structure of worm and worm gear from external interference.

As shown in FIG. 21, the bed arc-shaped rail includes a bed arc-shaped rack 812. The bed mechanism further includes a bed gear 8281 and a third bed driver 8283 driving the bed gear 8281 to rotate. The bed gear 8281 is disposed on the bed adjustable shelf 821 and engaged with the bed arc-shaped rack 812.

As shown in FIG. 21, the bed adjustable shelf 821 is provided with a mounting hole and provided with a bed gear mounting shelf 8282 thereon. The bed gear 8281 is disposed on the bed gear mounting shelf 8282, and in meshing engagement with the bed arc-shaped rack 812. The third bed driver 8283 may also be disposed on the bed gear mounting shelf 8282 as well.

When the bed gear 8281 is left-right offset at the time of engaging with the bed arc-shaped rack 812, the function of correcting and securing the normal operation is realized by the adjustments and the rolling collaboration of the first ball bearing 8215 and the second ball bearing 8217, and the redundant description thereof will not be further described herein.

As shown in FIGS. 20 and 21, the rehabilitation bed device 800 further includes a bed power distribution cabinet 840. All of the first bed driver 825, the second bed driver 827 and the third bed driver 8283 are electrically connected to a bed controller in the bed power distribution cabinet 840.

As shown in FIG. 19, the rehabilitation bed device 800 further includes a bed mounting encloser 851 and a bed mechanism encloser 852, for protecting respective structure inside it, and avoiding that the external objects directly contacts the inner structures as well, so as to function as protecting and improving the safety, and the redundant description thereof will not be further described herein.

As shown in FIGS. 25 to 26, the rehabilitation system may further include a movable device. The movable device includes a vehicle mechanism 861, a ship propelling mechanism 862 and an aircraft mechanism 863. Both of the ship propelling mechanism 862 and the aircraft mechanism 863 are disposed on the vehicle mechanism 861. The aircraft mechanism 863 is provided with a cabin 864. Both of the rehabilitation bed device 800 and the rehabilitation robot 10 are disposed in the cabin 864.

Further, the vehicle mechanism 861 further includes a drive module 8611, a vehicle module 8612 and an aircraft mounting module 8613. The aircraft mounting module 8613 includes a mounting plate for a detachable connection to the aircraft mechanism 863.

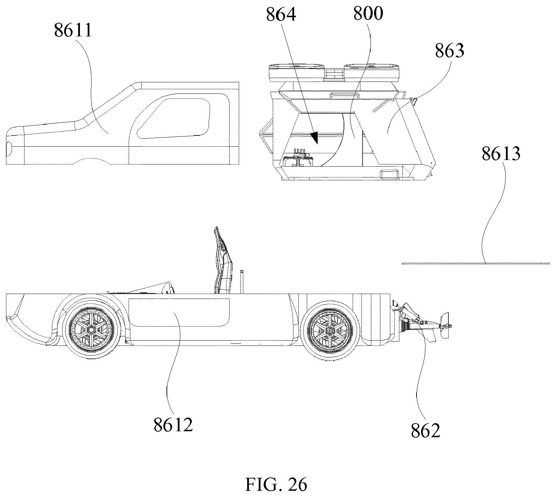

As shown in FIGS. 25 and 26, the rehabilitation bed device 800 and the aircraft mechanism 863 are installed and fixed by a means of detachable connection therebetween, so as to enable the rehabilitation therapy for the patient in need of rehabilitation to be performed on land, water and air, to enhance the fun and diversity during the rehabilitation process, especially for patients who need rehabilitation through the outdoors. It is capable of meeting this rehabilitation needs to the greatest extent, enabling patients to experience outdoor sun and air, and improving the effect of the rehabilitation.

The respective technical feature in the above-described embodiments may be arbitrarily combined, for the sake of brevity of description, all possible combinations of the respective technical feature in the above embodiments are not described, however, as long as there is no contradiction between the combinations of these technical features, all of them should be considered to be fallen into the scope of the description.

The above-described embodiments merely illustrate several embodiments of the present disclosure, and the description thereof is relatively specific and detailed, but it is not to be construed as limiting the scope of the disclosure. It should be noted that a number of variations and modifications may be made to those skilled in the art without departing from the concept of the present disclosure, these belong to the protection scope of the present disclosure. Therefore, the protection scope of the present disclosure should be determined by the appended claims.

## Claims

1. A rehabilitation robot (10), comprising:
an upper limb rehabilitation device comprising a shoulder width adjusting device (200) for adjusting a shoulder width of the rehabilitation robot (10), a right arm device (300), and a left arm device (400), the right arm device (300) and the left arm device (400) being disposed at both sides of the shoulder width adjusting device (200), respectively; and
a lower limb rehabilitation device connected to the upper limb rehabilitation device.

2. The rehabilitation robot (10) according to claim 1, wherein the shoulder width adjusting device (200) comprises:
a back mechanism comprising a first back plate (211), both of the right arm device (300) and the left arm device (400) being movably connected to the first back plate (211); and
a shoulder width adjusting mechanism comprising a shoulder width adjusting member, the shoulder width adjusting member being capable of driving the right arm device (300) and the left arm device (400) to move towards each other or away from each other.

3. The rehabilitation robot (10) according to claim 1 or 2, wherein the shoulder width adjusting device (200) further comprises a first shoulder plate (221) and a second shoulder plate (222), both of the first shoulder plate (221) and the second shoulder plate (222) are movably connected to the first back plate (211), the right arm device (300) is disposed on the first shoulder plate (221), the left arm device (400) is disposed on the second shoulder plate (222), the shoulder width adjusting member is capable of driving the first shoulder plate (221) and the second shoulder plate (222) to move, so as to adjust an interval between the right arm device (300) and the left arm device (400).

4. The rehabilitation robot (10) according to claim 3, wherein the first back plate (211) is provided with a shoulder width adjusting guide rail (2111), the first shoulder plate (221) is provided with a first shoulder width slider (2211) mating the shoulder width adjusting guide rail (2111), the second shoulder plate (222) is provided with a second shoulder width slider (2221) mating the shoulder width adjusting guide rail (2111), the shoulder width adjusting member drives the first shoulder width slider (2211) to move along the shoulder width adjusting guide rail (2111), and drives the second shoulder width slider (2221) to move along the shoulder width adjusting guide rail (2111).

5. The rehabilitation robot (10) according to claim 2, further comprising a head device (100) comprising a helmet mechanism disposed on the first back plate (211) and a head adjusting mechanism, wherein the back mechanism further comprises a second back plate (212) movably connected to the first back plate (211), the head adjusting mechanism is capable of driving the first back plate (211) to move on the second back plate (212), so as to adjust a position of the helmet mechanism relative to the second back plate (212).

6. The rehabilitation robot (10) according to any one of the preceding claims, wherein the right arm device (300) comprises an upper arm mechanism and a lower arm mechanism, the upper arm mechanism comprises an upper arm plate (311) and an upper arm adjusting plate (312), the upper arm adjusting plate (312) is movably connected to the upper arm plate (311) and capable of moving along the upper arm plate (311), the lower arm mechanism comprises a lower arm plate (321), an end of the lower arm plate (321) is rotatably connected to an end of the upper arm adjusting plate (312).

7. The rehabilitation robot (10) according to claim 6, wherein the lower arm mechanism further includes a lower arm adjusting plate (322), the right arm device (300) further comprises a wrist plate (341) rotatably connected to the lower arm adjusting plate (322) and a first wrist driver (342) fixed to the lower arm adjusting plate (322) and configured to drive the wrist plate (341) to rotate.

8. The rehabilitation robot (10) according to any one of the preceding claims, wherein the shoulder width adjusting device (200) comprises a back mechanism comprising a second back plate (212), the lower limb rehabilitation device comprises a right leg device (600) and a left leg device (700), both of the right leg device (600) and the left leg device (700) are disposed on the second back plate (212).

9. The rehabilitation robot (10) according to claim 8, wherein the left leg device (700) comprises:
a thigh mechanism comprising a thigh plate (711) and a thigh retractable plate (712) capable of sliding along the thigh plate (711);
a shank mechanism comprising a shank plate (721) and a shank retractable plate (722), one end of the shank plate (721) being rotatably connected to the thigh retractable plate (712); and
a foot mechanism comprising a foot plate shelf (731) rotatably connected to the shank retractable plate (722) and a foot plate driver (732) disposed on the shank retractable plate (722) and configured to drive the foot plate shelf (731) to rotate.

10. The rehabilitation robot (10) according to any one of the preceding claims, wherein the lower limb rehabilitation device further comprises a hip device (500), the shoulder width adjusting device (200) comprises a second back plate (212), the hip device (500) comprises a first hip plate (511), a second hip plate (512), and a first hip sliding rail (513), the first hip sliding rail (513) is disposed on the second back plate (212), the first hip plate (511) is provided with a first hip slider, the first hip slider is capable of sliding along the first hip sliding rail (513), so as to adjust an interval between the first hip plate (511) and the second hip plate (512).

11. The rehabilitation robot (10) according to any one of the preceding claims, further comprising an airbag device comprising an upper limb airbag mechanism disposed on the upper limb rehabilitation device and a lower limb airbag mechanism disposed on the lower limb rehabilitation device.

12. The rehabilitation robot (10) according to claim 11, wherein the upper limb airbag mechanism comprises an upper arm airbag (911) disposed on an upper arm mechanism of the upper limb rehabilitation device and a lower arm airbag (912) disposed on a lower arm mechanism of the upper limb rehabilitation device,
the lower limb airbag mechanism comprises a thigh airbag (921) disposed on a thigh mechanism of the lower limb rehabilitation device and a shank airbag (922) disposed on a shank mechanism of the lower limb rehabilitation device.

13. A rehabilitation system, comprising:
a rehabilitation bed device (800) comprising a bed base (811) and a bed body (822) movably connected to the bed base (811); and
a rehabilitation robot (10) according to any one of the preceding claims disposed on the bed body (822).

14. The rehabilitation system according to claim 13, wherein the rehabilitation bed device (800) further an adjustable shelf (821) and an anti-fall mechanism, the bed body (822) is disposed on the adjustable shelf (821), the bed base (811) is provided with an arc-shaped rail, the adjustable shelf (821) is capable of moving along the arc-shaped rail, the bed base (811) is further provided with an anti-fall rail, the anti-fall mechanism comprises rollers disposed on the adjustable shelf (821) and engaged with the anti-fall rail for preventing the adjustable shelf (821) from falling off the arc-shaped rail.

15. The rehabilitation system according to claim 13, further comprising a vehicle mechanism (861), a ship propelling mechanism (862), and an aircraft mechanism (863), the ship propelling mechanism (862) and the aircraft mechanism (863) are disposed on the vehicle mechanism (861), the aircraft mechanism (863) has a cabin (864), both of the rehabilitation bed device (800) and the rehabilitation robot (10) are disposed in the cabin (864).

## Amended claims

### Amended claims in accordance with Rule 137(2) EPC.

1. A rehabilitation robot (10), comprising:
an upper limb rehabilitation device comprising a shoulder width adjusting device (200) for adjusting a shoulder width of the rehabilitation robot (10), a right arm device (300), and a left arm device (400), the right arm device (300) and the left arm device (400) being disposed at both sides of the shoulder width adjusting device (200), respectively; and
a lower limb rehabilitation device connected to the upper limb rehabilitation device;
**characterized by**:
further comprising an airbag device comprising an upper limb airbag mechanism disposed on the upper limb rehabilitation device and a lower limb airbag mechanism disposed on the lower limb rehabilitation device.

2. The rehabilitation robot (10) according to claim 1, wherein the shoulder width adjusting device (200) comprises:
a back mechanism comprising a first back plate (211), both of the right arm device (300) and the left arm device (400) being movably connected to the first back plate (211); and
a shoulder width adjusting mechanism comprising a shoulder width adjusting member, the shoulder width adjusting member being capable of driving the right arm device (300) and the left arm device (400) to move towards each other or away from each other.

3. The rehabilitation robot (10) according to claim 1 or 2, wherein the shoulder width adjusting device (200) further comprises a first shoulder plate (221) and a second shoulder plate (222), both of the first shoulder plate (221) and the second shoulder plate (222) are movably connected to the first back plate (211), the right arm device (300) is disposed on the first shoulder plate (221), the left arm device (400) is disposed on the second shoulder plate (222), the shoulder width adjusting member is capable of driving the first shoulder plate (221) and the second shoulder plate (222) to move, so as to adjust an interval between the right arm device (300) and the left arm device (400).

4. The rehabilitation robot (10) according to claim 3, wherein the first back plate (211) is provided with a shoulder width adjusting guide rail (2111), the first shoulder plate (221) is provided with a first shoulder width slider (2211) mating the shoulder width adjusting guide rail (2111), the second shoulder plate (222) is provided with a second shoulder width slider (2221) mating the shoulder width adjusting guide rail (2111), the shoulder width adjusting member drives the first shoulder width slider (2211) to move along the shoulder width adjusting guide rail (2111), and drives the second shoulder width slider (2221) to move along the shoulder width adjusting guide rail (2111).

5. The rehabilitation robot (10) according to claim 2, further comprising a head device (100) comprising a helmet mechanism disposed on the first back plate (211) and a head adjusting mechanism, wherein the back mechanism further comprises a second back plate (212) movably connected to the first back plate (211), the head adjusting mechanism is capable of driving the first back plate (211) to move on the second back plate (212), so as to adjust a position of the helmet mechanism relative to the second back plate (212).

6. The rehabilitation robot (10) according to any one of the preceding claims, wherein the right arm device (300) comprises an upper arm mechanism and a lower arm mechanism, the upper arm mechanism comprises an upper arm plate (311) and an upper arm adjusting plate (312), the upper arm adjusting plate (312) is movably connected to the upper arm plate (311) and capable of moving along the upper arm plate (311), the lower arm mechanism comprises a lower arm plate (321), an end of the lower arm plate (321) is rotatably connected to an end of the upper arm adjusting plate (312).

7. The rehabilitation robot (10) according to claim 6, wherein the lower arm mechanism further includes a lower arm adjusting plate (322), the right arm device (300) further comprises a wrist plate (341) rotatably connected to the lower arm adjusting plate (322) and a first wrist driver (342) fixed to the lower arm adjusting plate (322) and configured to drive the wrist plate (341) to rotate.

8. The rehabilitation robot (10) according to any one of the preceding claims, wherein the shoulder width adjusting device (200) comprises a back mechanism comprising a second back plate (212), the lower limb rehabilitation device comprises a right leg device (600) and a left leg device (700), both of the right leg device (600) and the left leg device (700) are disposed on the second back plate (212).

9. The rehabilitation robot (10) according to claim 8, wherein the left leg device (700) comprises:
a thigh mechanism comprising a thigh plate (711) and a thigh retractable plate (712) capable of sliding along the thigh plate (711);
a shank mechanism comprising a shank plate (721) and a shank retractable plate (722), one end of the shank plate (721) being rotatably connected to the thigh retractable plate (712); and
a foot mechanism comprising a foot plate shelf (731) rotatably connected to the shank retractable plate (722) and a foot plate driver (732) disposed on the shank retractable plate (722) and configured to drive the foot plate shelf (731) to rotate.

10. The rehabilitation robot (10) according to any one of the preceding claims, wherein the lower limb rehabilitation device further comprises a hip device (500), the shoulder width adjusting device (200) comprises a second back plate (212), the hip device (500) comprises a first hip plate (511), a second hip plate (512), and a first hip sliding rail (513), the first hip sliding rail (513) is disposed on the second back plate (212), the first hip plate (511) is provided with a first hip slider, the first hip slider is capable of sliding along the first hip sliding rail (513), so as to adjust an interval between the first hip plate (511) and the second hip plate (512).

11. The rehabilitation robot (10) according to any one of the preceding claims, wherein the upper limb airbag mechanism comprises an upper arm airbag (911) disposed on an upper arm mechanism of the upper limb rehabilitation device and a lower arm airbag (912) disposed on a lower arm mechanism of the upper limb rehabilitation device,
the lower limb airbag mechanism comprises a thigh airbag (921) disposed on a thigh mechanism of the lower limb rehabilitation device and a shank airbag (922) disposed on a shank mechanism of the lower limb rehabilitation device.

12. A rehabilitation system, comprising:
a rehabilitation bed device (800) comprising a bed base (811) and a bed body (822) movably connected to the bed base (811); and
a rehabilitation robot (10) according to any one of the preceding claims disposed on the bed body (822).

13. The rehabilitation system according to claim 12, wherein the rehabilitation bed device (800) further an adjustable shelf (821) and an anti-fall mechanism, the bed body (822) is disposed on the adjustable shelf (821), the bed base (811) is provided with an arc-shaped rail, the adjustable shelf (821) is capable of moving along the arc-shaped rail, the bed base (811) is further provided with an anti-fall rail, the anti-fall mechanism comprises rollers disposed on the adjustable shelf (821) and engaged with the anti-fall rail for preventing the adjustable shelf (821) from falling off the arc-shaped rail.

14. The rehabilitation system according to claim 12, further comprising a vehicle mechanism (861), a ship propelling mechanism (862), and an aircraft mechanism (863), the ship propelling mechanism (862) and the aircraft mechanism (863) are disposed on the vehicle mechanism (861), the aircraft mechanism (863) has a cabin (864), both of the rehabilitation bed device (800) and the rehabilitation robot (10) are disposed in the cabin (864).
